# EUROPEAN PATENT APPLICATION

(11) **EP 0 908 415 A1**
(43) Date of publication of application: **14.04.1999**
(21) Application number: 98118837.8
(22) Date of filing: 06.10.1998
(51) Int. Cl.: C01B 3/00, H01M 4/38

(54) **Hydrogen storage alloy**

(30) Priority: 09.10.1997 JP 276834/97
(71) Applicant: Matsushita Electric Industrial Co., Ltd., Kadoma-shi, Osaka 571-8501 (JP)
(72) Inventor: Morita, Yoshio, Suita City 565-0804 (JP); Gamou, Takaharu, Fujiidera City 583-0026 (JP)
(74) Representative: Dr. Elisabeth Jung Dr. Jürgen Schirdewahn Dipl.-Ing. Claus Gernhardt

(57) **Abstract**

A V-type hydrogen storage alloy having a large effective hydrogen transfer capacity is provided. There is disclosed a hydrogen storage alloy comprising V-type alloy of body-centered cubic structure, which contains at least one element selected from the group consisting of Ti, Zr, Hf, Cr and Mo in an amount of 0.3 to 5 atomic%.

## Description

### BACKGROUND OF THE INVENTION

The present invention relates to a hydrogen storage alloy which can absorb and desorb hydrogen in a reversible manner and serves as an effective functional material for the use of hydrogen energy.

In general, there are some properties desirable for a hydrogen storage alloy to have, i.e. ease of activations, a large hydrogen storage capacity, a hydrogen absorption-desorption curve having a wide plateau region with exceptional flatness, a small hysteresis, a heat of formation suitable for its operating temperature, a high absorption-desorption velocity, resistance to poisoning by impurities, good thermal conductivity, and the like. As the most important property among them when storing hydrogen, there is a practicably usable and effectively large hydrogen storage capacity.

As is well known, RNi₅-type alloys, wherein R is La or a mish metal, are commercially used as hydrogen storage alloys having a relatively large discharge capacity which are employed for negative electrodes of nickel-metal hydride storage batteries. LaNi₅ alloy has a hydrogen storage capacity of 1.4 wt% and a equilibrium hydrogen absorption-desorption pressure of 0.2 to 0.3 MPa at room temperature, is easy to handle, and can absorb and desorb hydrogen at a temperature close to room temperature. Further, as means for reducing cost of LaNi₅ alloy, it is tried to employ a mish metal which is a composition of unrefined rare earth metals instead of expensive lanthanum, and a mish metal-nickel multi-element alloy with ternary, quaternary and/or quinternary elements are added thereto. The hydrogen storage capacity of the mish metal-nickel alloy is about 1.2 to 1.5 wt% at room temperature. These alloys are used in the development of energy storage and energy conversion technologies in a large number of fields such as nickel-metal hydride storage batteries, hydrogen storage, transport containers, metal hydride heat pumps.

Also, AB₂-type Laves phase alloys with C14, C15 or C36 crystal structure have been previously investigated as hydrogen storage alloys and many Laves phase alloys are known. Among them, as an effective hydrogen storage alloy, there is one having the formula represented by TiₐZr₁₋ₐM₂ wherein 0≦a≦1 and M is one or more elements selected from the group consisting of Mn, Cr, V, Fe, Co and Mo. In particular, one of the Laves phase alloys with a large hydrogen storage capacity and exceptional plateau characteristics is Ti_{0.9}Zr_{0.1}Mn_{1.4}Cr_{0.4}V_{0.2} alloy. This alloy has a large hydrogen storage capacity of 2.1 wt% and a hydride dissociation pressure of about 0.9 MPa at a temperature close to room temperature, and is easy to be activated.

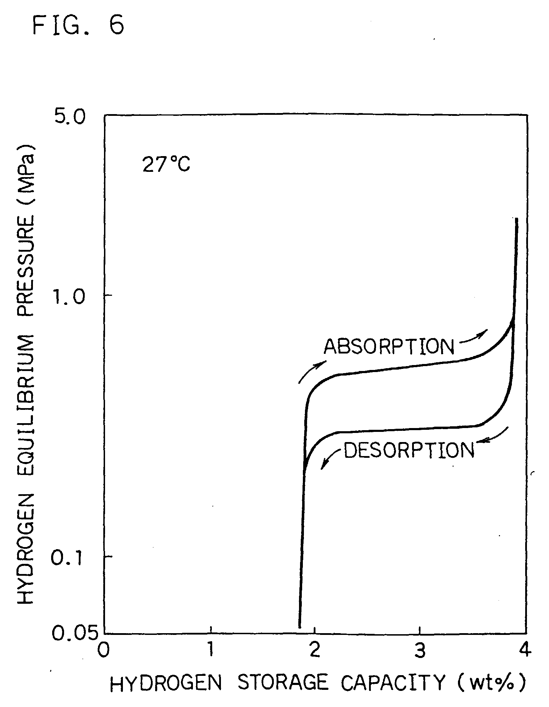

On the other hand, it is known that maximum hydrogen storage capacity of metal V (vanadium) with a crystal structure of body-centered cubic structure is 3.9 wt% and that of V-type alloy such as VTiMn or V_{0.4}Ti_{0.3}Cr_{0.3} with body-centered cubic structure is 3.6 wt%. The hydrogen pressure composition isotherm of metal V, however, has two plateau regions at a lower pressure side and a higher pressure side. Since the pressure of the plateau region at a lower pressure side is much smaller than atmospheric pressure, hydrogen absorption and desorption is based on the plateau region at a higher pressure side (hereinafter, referred to also as "higher plateau region"). In Figure 6 is shown the higher plateau in the hydrogen pressure composition isotherm of metal V. From Figure 6, it is recognized that practically available and effective hydrogen storage capacities of both metal V and V-type alloy are about 2.0 wt%. Also, with respect to V type alloy such as VTiMn or VTiCr, they have relatively worse cycling characteristics when repeating absorption and desorption of hydrogen, and maximum hydrogen absorption-desorption capacities thereof are remarkably decreased as the hydrogen absorption-desorption cycle is repeated.

In whatever use of hydrogen storage alloy, a large effective hydrogen absorption-desorption capacity is desired at its operating temperature. Namely, when regarding hydrogen storage alloy as a hydrogen feeding device, it is desired to possibly desorb hydrogen atom effectively when equilibrium hydrogen pressure of the alloy is not less than 1 atom, i.e. atmospheric pressure. The effective hydrogen transfer capacity, which is the effective hydrogen absorption-desorption capacity, of the above-mentioned LaNi₅ alloy is 1.2 wt% at room temperature. And, the effective hydrogen transfer capacity of the above-mentioned Ti_{0.9}Zr_{0.1}Mn_{1.4}Cr_{0.4}V_{0.2} alloy, which has a large storage capacity among various Laves phase alloys known as of AB₂-type, is 1.6 wt% at room temperature. Even the effective hydrogen transfer capacity of even metal V or V-type alloy having a large hydrogen storage capacity is about 2.0 wt% at room temperature. Further, the hydrogen storing property of V-type alloy is deteriorated as the hydrogen absorption-desorption cycle is repeated.

Therefore, it is presently desired to develop practically available alloys with a greater effective hydrogen transfer capacity and good cycle life characteristics.

Then, the object of the present invention is to provide a hydrogen storage alloy which has a larger effective hydrogen transfer capacity than ever and good cycle life characteristics.

### BRIEF SUMMARY OF THE INVENTION

The present invention provides a hydrogen storage alloy of body-centered cubic structure comprising V-type alloy, which contains at least one element selected from the group consisting of Ti, Zr, Hf, Cr and Mo in an amount of 0.3 to 5 atomic%.

Since a maximum hydrogen storage capacity is remarkably decreased and an effective hydrogen transfer capacity is also remarkably decreased in case where an amount of the element to be added to V is more than 5 atomic%, the amount is necessarily not more than 5 atomic%. And, since there is the effect that the hydrogen storage capacity tends to increase when the amount is 0.3 atomic%, the lower limit of the amount is preferably 0.3 atomic%. Preferably, the amount of the element to be added is 1 to 2 atomic%.

Further, among the elements, Zr is preferable from the viewpoint that flatness of the higher plateau is excellent and hysteresis is small.

In the V-type alloy of the present invention with at least one element selected from the group consisting of the above-mentioned elements, stability of metal hydride phase corresponding to the higher plateau region is enhanced by adding the elements to the body-centered cubic structure. Therefore, there are given the following effects that the maximum hydrogen storage capacity of the alloy is increased by alloying and that the effective hydrogen transfer capacity is also increased because the higher plateau region of the hydrogen absorption-desorption curve is enlarged. As the result, a hydrogen storage alloy having a large effective hydrogen transfer capacity can be achieved.

### BRIEF DESCRIPTION OF THE SEVERAL VIEWS OF THE DRAWING

Figure 1 is a diagram of the hydrogen pressure composition isotherm at room temperature for the hydrogen storage alloy V_{0.99}Ti_{0.01} in an example of the present invention.
Figure 2 is a diagram of the hydrogen pressure composition isotherm at room temperature for the hydrogen storage alloy V_{0.99}Zr_{0.01} in a different example of the present invention.
Figure 3 is a diagram of the hydrogen pressure composition isotherm at room temperature for the hydrogen storage alloy V_{0.99}Hf_{0.01} in a further different example of the present invention.
Figure 4 is a diagram of the hydrogen pressure composition isotherm at room temperature for the hydrogen storage alloy V_{0.99}Cr_{0.01} in a further different example of the present invention.
Figure 5 is a diagram of the hydrogen pressure composition isotherm at room temperature for the hydrogen storage alloy V_{0.99}Mo_{0.01} in a further different example of the present invention.
Figure 6 is a diagram of the hydrogen pressure composition isotherm at room temperature for the hydrogen storage metal V in a prior art.

### DETAILED DESCRIPTION OF THE INVENTION

The present invention is based on the result obtained by designing a novel alloy while studying crystal structure and carrying out several experiments. It is noted that the alloy of the present invention can be prepared by a conventional method such as atomizing method, mechanical alloying method or the like.

In the hydrogen absorption-desorption curve of metal V, the width of the lower plateau region and the width of the higher plateau region are almost the same and, therefore, stabilities of hydride phases corresponding to both plateau regions are regarded as the same from each other. And, by adding the above-mentioned element into metal V, it has been expected that the crystal field of an alloy to be obtained is changed and stability of each hydride phase is also changed.

As the result of preparing and investigating such alloys in practice, however, it has been confirmed that the addition of the element increases the maximum hydrogen storage capacity, stabilizes the higher plateau region, and is effective to improve the effective hydrogen transfer capacity. Further, the cycle life of hydrogen absorption-desorption was good and any decrease in hydrogen storage capacity was not observed.

As described above, by employing the hydrogen storage alloy of the present invention which has a large hydrogen absorption-desorption capacity, an improvement in efficiency in the fields of energy storage and transformation technology which use hydrogen storage alloys can be achieved.

The present invention is explained by the following examples more in detail but is not limited thereto.

### EXAMPLE 1

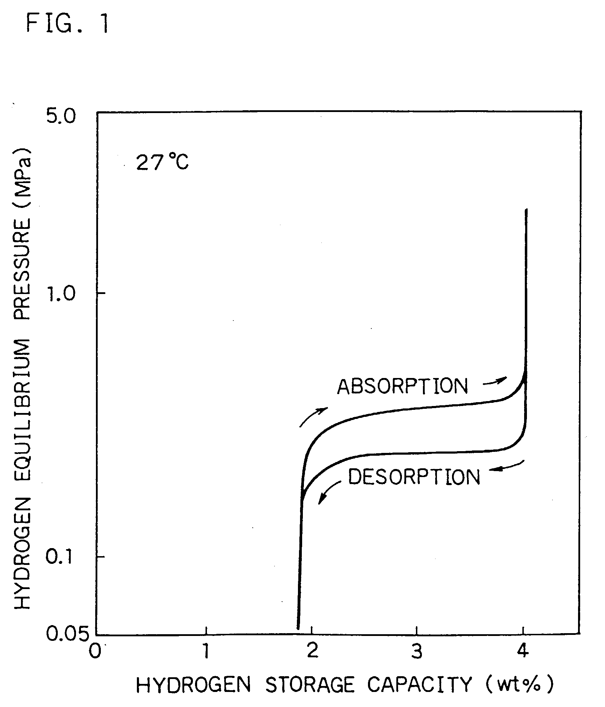

Figure 1 is a diagram of the hydrogen pressure composition isotherm at room temperature for the hydrogen storage alloy V_{0.99}Ti_{0.01} of the present example. 29.72 g of 99.7% pure metal V and 0.28 g of 99.5% pure metal Ti were weighed out and co-melted in an arc belting furnace under an atmosphere of argon to form an alloy. During the co-melting, the ingots were remelted five times while being rotated to form a homogeneous alloy. The obtained button ingots were pulverized to form samples for hydrogen absorption-desorption capacity measurement.

The hydrogen absorption-desorption capacity measurement was carried out by measuring the hydrogen pressure composition isotherm. In this method, a change in an amount of hydrogen which reacts with an alloy is determined and is measured on the virgin metal condition. In first, the change in the amount of hydrogen within a constant volume was calculated from the temperature and difference in pressures before and after the measurement. Then, by calculating the change of the hydride composition at a constant temperature, the amount of hydrogen which reacted with the alloy was determined. In this method, the measurement was based on the state where any hydrogen was stored, and was carried out after activating the sample and evacuating the same at a high temperature to remove the residual hydrogen. Namely, the activation was carried out by placing the sample in vacuum for 3 hours at 500°C, hydrogen absorption-desorption was repeated 3 times, the sample was evacuated again for 6 hours at 800°C and, then, the measurement was carried out.

Figure 1 shows that the maximum hydrogen storage capacity is 4.0 wt%, that the width of the higher plateau region is wide and flatness thereof is good, and that the effective hydrogen transfer capacity is improved by the addition of Ti. By the enlargement of the width of the higher plateau region, the effective hydrogen transfer capacity becomes 2.1% and is increased by about 5% compared to metal V without Ti added.

In the present example explained is the case where the alloy contains 1 atomic% of Ti. The increasing ratio (%) of the effective hydrogen transfer capacity according to the amount of Ti is as the followings: 4% in case where 2 atomic% of Ti is contained, 3% in case where 3 atomic% of Ti is contained, 2% in case where 4 atomic% of Ti is contained, and 1% in case where 5 atomic% of Ti is contained. When the amount of Ti is more than 5 atomic%, the maximum hydrogen storage capacity is remarkably decreased and the effective hydrogen transfer capacity is also remarkably decreased. Accordingly, the amount of Ti contained in the alloy of the present invention should be not more than 5 atomic%.

It is noted that Ti element was added to pure metal V in the present example and the same effect can be obtained even when Ti element is added to solid solution vanadium material with other element added thereto. As such solid solution vanadium material, there are, for example V₁₋ₓ Alₓ(x= 0 to 0.3), V₁₋ₓCoₓ(x = 0 to 0.1), V₁₋ₓFeₓ(x= 0 to 0.1), V₁₋ₓMnₓ(x = 0 to 0.1), V₁₋ₓNbₓ(x= 0 to 0.3), V₁₋ₓPdₓ(x= 0 to 0.1), V₁₋ₓSnₓ(x= 0 to 0.1). Further, although only Ti is added to pure metal V in the present example, the same effect can be obtained even when two or more elements selected from the group consisting of Ti, Zr, Hf, Cr and Mo if the total amount of the elements is not more than 5 atomic%.

### EXAMPLE 2

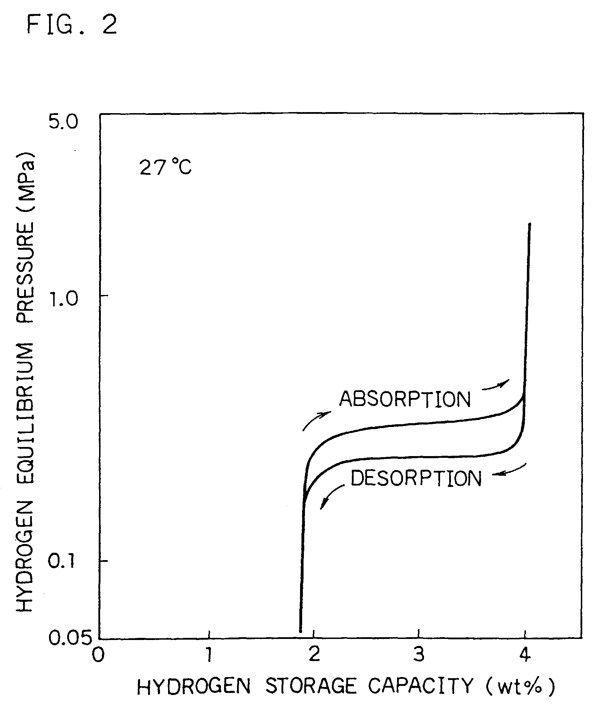

Figure 2 is a diagram of the hydrogen pressure composition isotherm at room temperature for the hydrogen storage alloy V_{0.99}Zr_{0.01} of the present example. 29.47 g of 99.7% pure metal V and 0.53 g of 99% pure metal Zr were weighed out and co-melted in an arc melting furnace under an atmosphere of argon to form an alloy. During the co-melting, the ingots were remelted five times while being rotated to form a homogeneous alloy. The obtained button ingots were processed finely to form samples for hydrogen absorption-desorption capacity measurement.

The hydrogen absorption-desorption capacity measurement was carried out in the same manner as in Example 1. The activation was carried out by placing the sample in vacuum for 3 hours at 500°C. Then, after repeating hydrogen absorption-desorption 3 times, the sample was evacuated again for 6 hours at 800°C and, then, the measurement was carried out.

Figure 2 shows that maximum hydrogen storage capacity is 4.0 wt%, that the width of the higher plateau region is wide and flatness thereof is good, and that the effective hydrogen transfer capacity is improved by the addition of Zr. By the enlargement of the width of the higher plateau region, the effective hydrogen transfer capacity becomes 2.1% and is increased by about 5% compared to metal V without Zr added.

In the present example explained is the case where the alloy contains 1 atomic% of Zr. The increasing ratio(%) of the effective hydrogen transfer capacity according to the amount of Zr is as the followings: 4% in case where 2 atomic% of Zr is contained, 3 % in case where 3 atomic% of Zr is contained, 2% in case where 4 atomic% of Zr is contained, and 1 % in case where 5 atomic% of Zr is contained. When the amount of Zr is more than 5 atomic%, the maximum hydrogen storage capacity is remarkably decreased and the effective hydrogen transfer capacity is also remarkably decreased. Accordingly, the amount of Zr contained in the alloy of the present invention should be not more than 5 atomic%.

It is noted that Zr element is added to pure metal V in the present example and the same effect can be obtained even when Zr element is added to solid solution vanadium material with other element added thereto. As such solid solution vanadium material, there are, for example, V₁₋ₓAlₓ(x= 0 to 0.3), V₁₋ₓCoₓ(x= 0 to 0.1), V₁₋ₓFeₓ(x= 0 to 0.1), V₁₋ₓMnₓ(x= 0 to 0.1), V₁₋ₓNbₓ(x= 0 to 0.3), V₁₋ₓPdₓ(x= 0 to 0.1), V₁₋ₓSnₓ(x= 0 to 0.1). Further, although only Zr is added to pure metal V in the present example, the same effect can be obtained even when two or more elements selected from the group consisting of Ti, Zr, Hf, Cr and Mo if the total amount of the elements is not more than 5 atomic%.

### EXAMPLE 3

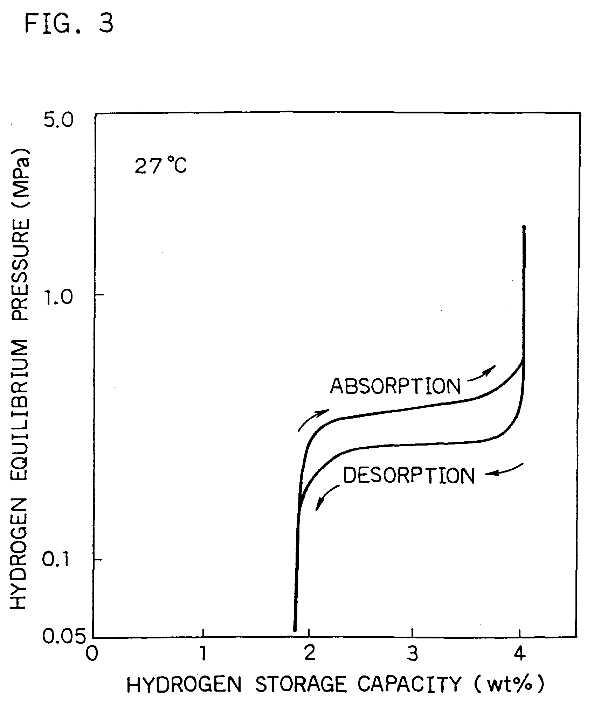

Figure 3 is a diagram of the hydrogen pressure composition isotherm at room temperature for the hydrogen storage alloy V_{0.99}Hf_{0.01} of the present example. 28.97 g of 99.7% pure metal V and 1.03 g of 98% pure metal Hf were weighed out and co-melted in an arc melting furnace under an atmosphere of argon to form an alloy. During the co-melting, the ingots were remelted five times while being rotated to form a homogeneous alloy. The obtained button ingots were processed finely to form samples for hydrogen absorption-desorption capacity measurement. The hydrogen absorption-desorption capacity measurement was carried out in the same manner as in Example 1. The activation was carried out by placing the sample in vacuum for 3 hours at 500°C. Then, after repeating hydrogen absorption-desorption 3 times, the sample was evacuated again for 6 hours at 800°C and, then, the measurement was carried out.

Figure 3 shows that maximum hydrogen storage capacity is 4.0 wt%, that the width of the higher plateau region is wide and flatness thereof is good, and that the effective hydrogen transfer capacity is improved by the addition of Hf. By the enlargement of the width of the higher plateau region, the effective hydrogen transfer capacity becomes 2.1% and is increased by about 5% compared to metal V without Hf added.

In the present example explained is the case where the alloy contains 1 atomic%of Hf. The increasing ratio(%) of the effective hydrogen transfer capacity according to the amount of Hf is as the followings: 4%in case where 2 atomic%of Hf is contained, 3%in case where 3 atomic%of Hf is contained, 2%in case where 4 atomic%of Hf is contained, and 1%in case where 5 atomic%of Hf is contained. When the amount of Hf is more than 5 atomic%, the maximum hydrogen storage capacity is remarkably decreased and the effective hydrogen transfer capacity is also decreased remarkably. Accordingly, the amount of Hf contained in the alloy of the present invention should be not more than 5 atomic%.

It is noted that Hf element is added to pure metal V in the present example and the same effect can be obtained even when Hf element is added to solid solution vanadium material with other element added thereto. As such solid solution vanadium material, there are, for example, V₁₋ₓAlₓ(x= 0 to 0.3), V₁₋ₓCoₓ(x= 0 to 0.1), V₁₋ₓFeₓ(x= 0 to 0.1), V₁₋ₓMnₓ(x= 0 to 0.1), V₁₋ₓNbₓ(x= 0 to 0.3), V₁₋ₓPdₓ(x= 0 to 0.1), V₁₋ₓSnₓ(x= 0 to 0.1). Further, although only Hf is added to pure metal V in the present example, the same effect can be obtained even when two or more elements selected from the group consisting of Ti, Zr, Hf, Cr and Mo if the total amount of the elements is not more than 5 atomic%.

### EXAMPLE 4

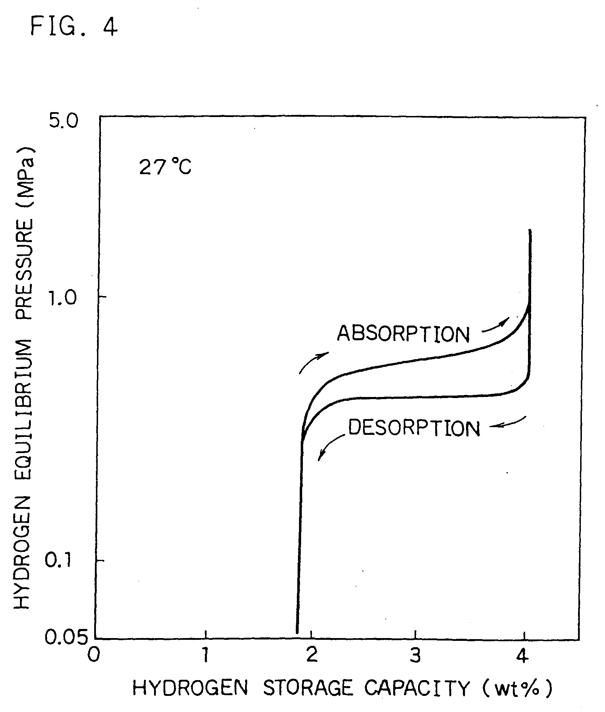

Figure 4 is a diagram of the hydrogen pressure composition isotherm at room temperature for the hydrogen storage alloy V_{0.99}Cr_{0.01} of the present example. 29.69 g of 99.7% pure metal V and 0.31 g of 99.9% pure metal Cr were weighed out and co-melted in an arc melting furnace under an atmosphere of argon to form an alloy. During the co-melting, the ingots were remelted five times while being rotated to form a homogeneous alloy. The obtained button ingots were processed finely to form samples for hydrogen absorption-desorption capacity measurement. The hydrogen absorption-desorption capacity measurement was carried out in the same manner as in Example 1. The activation was carried out by placing the sample in vacuum for 3 hours at 500°C. Then, after repeating hydrogen absorption-desorption 3 times, the sample was evacuated again for 6 hours at 800°C and, then, the measurement was carried out.

Figure 4 shows that maximum hydrogen storage capacity is 4.0 wt%, that the width of the higher plateau region is wide and flatness thereof is good, and that the effective hydrogen transfer capacity is improved by the addition of Cr. By the enlargement of the width of the higher plateau region, the effective hydrogen transfer capacity becomes 2.1% and is increased about 5% as compared as in case of metal V to which any Cr is not added.

In the present example explained is the case where the alloy contains 1 atomic% of Cr. The increasing ratio(%) of the effective hydrogen transfer capacity according to the amount of Cr is as the followings: 4% in case where 2 atomic% of Cr is contained, 3% in case where 3 atomic% of Cr is contained, 2% in case where 4 atomic%of Cr is contained, and 1%in case where 5 atomic% of Cr is contained. When the amount of Cr is more than 5 atomic%, the maximum hydrogen storage capacity is remarkably decreased and the effective hydrogen transfer capacity is also decreased remarkably. Accordingly, the amount of Cr contained in the alloy of the present invention should be not more than 5 atomic%.

It is noted that Cr element is added to pure metal V in the present example and the same effect can be obtained even when Cr element is added to solid solution vanadium material with other element added thereto. As such solid solution vanadium material, there are, for example, V₁₋ₓAlₓ(x= 0 to 0.3), V₁₋ₓCoₓ(x= 0 to 0.1), V₁₋ₓFeₓ(x= 0 to 0.1), V₁₋ₓMnₓ(x= 0 to 0.1), V₁₋ₓNbₓ(x= 0 to 0.3), V₁₋ₓPdₓ(x= 0 to 0.1), V₁₋ₓSnₓ(x= 0 to 0.1). Further, although only Cr is added to pure metal V in the present example, the same effect can be obtained even when two or more elements selected from the group consisting of Ti, Zr, Hf, Cr and Mo if the total amount of the elements is not more than 5 atomic%.

### EXAMPLE 5

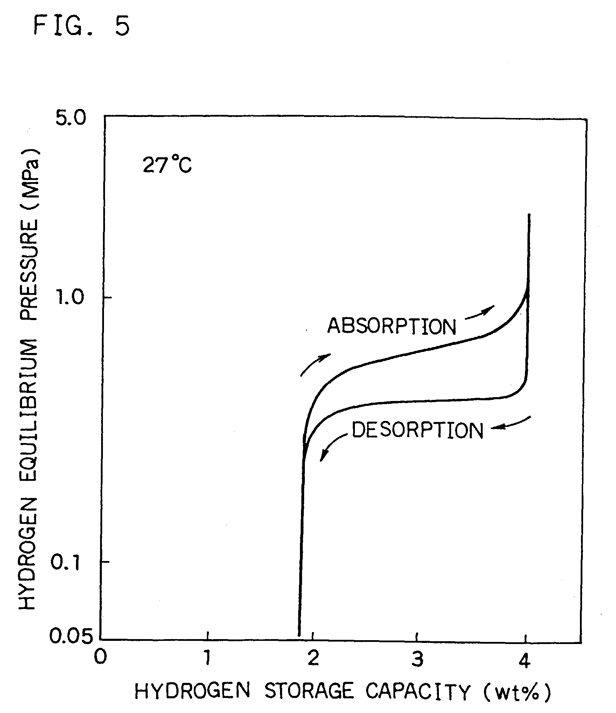

Figure 5 is a diagram of the hydrogen pressure composition isotherm at room temperature for the hydrogen storage alloy V_{0.99}Mo_{0.01} of the present example. 29.44 g of 99.7% pure metal V and 0.56 g of 99.9% pure metal Mo were weighed out and co-melted in an arc melting furnace under an atmosphere of argon to form an alloy. During the co-melting, the ingots were remelted five times while being rotated to form a homogeneous alloy. The obtained button ingots were processed finely to form samples for hydrogen absorption-desorption capacity measurement. The hydrogen absorption-desorption capacity measurement was carried out in the same manner as in Example 1. The activation was carried out by placing the sample in vacuum for 3 hours at 500°C. Then, after repeating hydrogen absorption-desorption 3 times, the sample was evacuated again for 6 hours at 800°C and, then, the measurement was carried out.

Figure 5 shows that maximum hydrogen storage capacity is 4.0 wt%, that the width of the higher plateau region is wide and flatness thereof is good, and that the effective hydrogen transfer capacity is improved by the addition of Mo. By the enlargement of the width of the higher plateau region, the effective hydrogen transfer capacity becomes 2.1%and is increased by about 5% compared to metal V without Mo added.

In the present example explained is the case where the alloy contains 1 atomic% of Mo. The increasing ratio(%) of the effective hydrogen transfer capacity according to the amount of Mo is as the followings: 4% in case where 2 atomic% of Mo is contained, 3% in case where 3 atomic% of Mo is contained, 2% in case where 4 atomic% of Mo is contained, and 1% in case where 5 atomic% of Mo is contained. When the amount of Mo is more than 5 atomic%, the maximum hydrogen storage capacity is remarkably decreased and the effective hydrogen transfer capacity is also decreased remarkably. Accordingly, the amount of Mo contained in the alloy of the present invention should be not more than 5 atomic%.

It is noted that Mo element is added to pure metal V in the present example and the same effect can be obtained even when Mo element is added to solid solution vanadium material with other element added thereto. As such solid solution V, there are, for example, V₁₋ₓAlₓ(x= 0 to 0.3), V₁₋ₓCoₓ(x= 0 to 0.1), V₁₋ₓFeₓ(x= 0 to 0.1), V₁₋ₓMnₓ(x= 0 to 0.1), V₁₋ₓNbₓ(x= 0 to 0.3), V₁₋ₓPdₓ(x= 0 to 0.1), V₁₋ₓSnₓ(x= 0 to 0.1). Further, although only Mo is added to pure metal V in the present example, the same effect can be obtained even when two or more elements selected from the group consisting of Ti, Zr, Hf, Cr and Mo if the total amount of the elements is not more than 5 atomic%.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. Hydrogen storage alloy comprising V-type alloy of body-centered cubic structure, which contains at least one element selected from the group consisting of Ti, Zr, Hf, Cr and Mo in an amount of 0.3 to 5 atomic%.

2. The hydrogen storage in accordance with Claim 1, wherein the element is Zr.

3. The hydrogen storage alloy in accordance with Claim 1, wherein the V-type alloy contains the element in an amount of 1 to 2 atomic%.

4. The hydrogen storage alloy in accordance with Claim 2, wherein the V-type alloy contains the element in an amount of 1 to 2 atomic%.
